# FASCICULE DE BREVET EUROPEEN

(11) **EP 4 266 900 B1**
(45) Date de publication et mention de la délivrance du brevet: **25.09.2024**
(21) Numéro de dépôt: 21847678.6
(22) Date de dépôt: 22.12.2021
(51) Int. Cl.: A23K 40/25, A23J 3/22

(54) **PROCÉDÉ D'OBTENTION D'UN SUBSTITUT VÉGÉTAL À LA CHAIR ANIMALE CUITE**
VERFAHREN ZUR GEWINNUNG EINES PFLANZENBASIERTEN ERSATZES FÜR GEKOCHTES TIERFLEISCH
METHOD FOR OBTAINING A PLANT-BASED SUBSTITUTE FOR COOKED ANIMAL FLESH

(30) Priorité: 22.12.2020 FR 2013965
(43) Date de publication de la demande: 01.11.2023
(73) Titulaire: Algama, 75002 Paris (FR)
(72) Inventeur: MONNET, Anne-Flore, 75014 Paris (FR)
(74) Mandataire: Yes My Patent
(86) Numéro de dépôt international: PCT/EP2021/087353
(87) Numéro de publication internationale: WO 2022/136577

(56) Documents cités:
- EP-A1- 2 277 396
- WO-A1-2008/034063
- VATANSEVER SERAP ET AL: "Low- and High-Moisture Extrusion of Pulse Proteins as Plant-Based Meat Ingredients: A Review", CEREAL FOODS WORLD, vol. 65, no. 4, 1 August 2020 (2020-08-01), XP055898409, ISSN: 2576-1056, DOI: 10.1094/CFW-65-4-0038
- SHA LEI ET AL: "Plant protein-based alternatives of reconstructed meat: Science, technology, and challenges", TRENDS IN FOOD SCIENCE AND TECHNOLOGY, ELSEVIER SCIENCE PUBLISHERS, GB, vol. 102, 8 June 2020 (2020-06-08), pages 51 - 61, XP086220158, ISSN: 0924-2244, [retrieved on 20200608], DOI: 10.1016/J.TIFS.2020.05.022

## Description

La présente demande de brevet concerne un procédé d'obtention d'un substitut végétal à la chair animale cuite présentant un aspect fibreux. Le procédé précité permet l'amélioration de la texture fibreuse du produit constituant une alternative végétale à la chair animale cuite grâce à la réalisation d'une étape de gélification préalable à une technique d'extrusion industrielle. Ces alternatives végétales à la chair animale cuite conviennent parfaitement à des utilisations dans des préparations alimentaires, par exemple la préparation de nuggets de poulet, de croquettes de poisson, de beignets de crevette, de saucisses ou bien encore de steaks végétaux.

### Art antérieur

Il existe aujourd'hui des procédés d'obtention de substituts à la chair animale cuite grâce à l'utilisation de l'extrusion. Cela permet d'obtenir des caractéristiques organoleptiques s'approchant des versions animales notamment en termes d'aromatique et d'odeur mais également d'un point de vue texture sur des critères de fermeté et d'élasticité.

La famille de brevet WO2008034063A1 de la société SOLAE, LLC divulgue un procédé d'obtention d'un substitut de thon en conserve comprenant un produit à base de protéines végétales et de chair de poisson.

Cependant ces procédés ont pour inconvénient de permettre la production d'un produit dont l'aspect fibreux est limité, parfois même inexistant alors que ce critère est primordial dans le profil organoleptique de la chair animale cuite.

Le Demandeur a résolu ce problème technique d'amélioration de la texture fibreuse grâce à la réalisation d'une étape de gélification préalable aux technique standard d'extrusion industrielle.

Ainsi, selon un premier aspect, l'invention concerne un procédé d'obtention d'un substitut végétal à la chair animale cuite comprenant les étapes de :
a. Mélanger de l'eau, de l'huile alimentaire et des protéines végétales constituées d'un extrait composé de 50% à 98% de protéines provenant de soja, de pois, d'haricot mungo, de fève, de pomme de terre, de blé ou de microalgues ou une combinaison de ceux-ci, dans un ratio de 8% à 20% de protéines végétales, 2% à 10% d'huile alimentaire et 70% à 90 % d'eau ;
b. Homogénéiser le produit obtenu à l'étape a. à une pression comprise entre 100 et 600 bar, à une température comprise entre 50°C et 90°C, à une vitesse du liquide sous pression comprise entre 100 et 400 m.s-1 ;
c. Chauffer le produit obtenu à l'étape b. pendant 10 à 30 min à une température de 70 à 95°C, sous une agitation de 50 à 200 rpm ;
d. Insérer le produit obtenu à l'étape c. dans un extrudeur à une vitesse maximum de 25 kilogrammes par minute, le moteur lié aux vis de l'extrudeur étant réglé à une vitesse comprise entre 200 et 500 rpm, et la température de l'extrudeur étant réglée à entre 50°C et 200°C ;
e. Obtention d'un substitut à la chair animale cuite.

Par « substitut végétal à la chair animale cuite » est entendu un produit permettant de remplacer la chair animale cuite en s'approchant autant que possible de ses propriétés. Dans le cadre de l'invention, ledit substitut a des propriétés organoleptiques s'approchant des versions animales notamment en termes d'aromatique et d'odeur mais également d'un point de vue texture sur des critères de fermeté et d'élasticité permettant une assimilation à la texture fibreuse de la viande animale.

Par « chair animale » est entendu la viande telle que classiquement consommée, et provenant préférentiellement de la partie musculaire du corps des animaux.

Par « aspect fibreux » obtenu par le procédé selon l'invention, est entendu par exemple la texture obtenue lors de la cuisson d'un steak de boeuf ou d'un nugget. Ces fibres de viande sont notamment visibles lors de la découpe de ce produit, et apportent un aspect visuel et gustatif caractéristique de ce type de produit. Le procédé selon l'invention permet d'obtenir un substitut ayant un visuel et des propriétés organoleptiques similaires.

Par « produit » est entendu au sens de l'invention dans le procédé les différentes compositions ou mélanges obtenus aux différentes étapes, pouvant être de manière interchangeable dénommés « produit », « substitut » ou « mélange ».

Par « extrudeur », on entend tout type d'extrudeur disponible commercialement qui peut être simple vis ou bi-vis. Les vis broient mécaniquement le produit en le propulsant depuis le point d'alimentation vers le point de sortie. Le point de sortie est équipé d'une buse pouvant prendre différente forme et taille.

La combinaison des étapes b. et c. permet une gélification préalable à l'extrusion du produit, permettant d'améliorer la structure fibreuse du produit final obtenu.

De manière préférée selon l'invention, l'étape a. de mélange est réalisée pendant 1 à 5 min à une vitesse comprise entre 200 rpm et 800 rpm à une température comprise entre 10°C et 30°C.

De manière préférée selon l'invention, la pression appliquée à l'étape b. est comprise entre 150 et 300 bar.

De manière préférée selon l'invention, la température appliquée à l'étape c. est comprise entre 80°C et 95°C.

De manière préférée selon l'invention, le procédé d'obtention d'un substitut végétal à la chair animale cuite comprend une étape b'. entre les étapes b. et c., de mélange du produit obtenu à l'étape b. avec de la transglutaminase.

Par « transglutaminase » est entendu une enzyme catalysant la formation de liaisons covalentes au sein des protéines entre des groupes amine libres, par exemple ceux des résidus de lysine, et le groupe gamma-carboxamide des résidus de glutamine. La formation de ces liaisons permet de renforcer le réseau protéique obtenu lors de la gélification, et ainsi de favoriser l'obtention d'une texture fibreuse à l'issue de l'étape d'extrusion.

De manière préférée selon l'invention, la masse de transglutaminase ajoutée est comprise entre 0,1% à 5% en masse du produit obtenu à l'étape b.

De manière encore plus préférée selon l'invention, le mélange avec la transglutaminase est réalisé pendant 60 à 240 min à une vitesse de 50 à 200 rpm et à une température de 30 à 60°C, de préférence 30 à 40°C.

De manière préférée, la buse de sortie de l'extrudeur par lequel est éjecté le produit est rectangulaire et mesure entre 5 et 50 mm (millimètres) de largeur et 1 à 30 mm (millimètres) de hauteur.

En fonction des produits alimentaires souhaitant être formés à partir du substitut obtenu par le procédé, la taille de l'extrudat sortant de l'extrudeur peut être différente.

Par exemple, pour la formation de nuggets, le produit obtenu en sortie d'extrudeur est découpé en morceaux de forme irrégulière dont la plus grande longueur est de 4cm (centimètres). Pour la formation de croquettes de poisson, le produit obtenu en sortie d'extrudeur est découpé en pavés de 4cm (centimètres) de largeur, 2cm (centimètres) de hauteur et 3cm (centimètres) de longueur, puis rebroyé pour former une chaire fibreuse fine.

Différents procédés bien connus de l'homme du métier permettent d'obtenir des matières extrudées riches en protéines. On peut notamment citer l'utilisation d'un cuiseur-extrudeur, tel que présenté dans les parties matériel & méthodes des articles :
a. Philipp, C., Oey, I., Silcock, P., Beck, S. M., & Buckow, R. (2017). Impact protein content on physical and microstructural properties of extruded rice starch-pea protein snacks. Journal of Food Engineering, 212, 165-173.
b. Kristiawan, M., Micard, V, Maladira, P., Alchamieh, C., Maigret, J. E., Réguerre, A. L., ... & Della Valle, G. (2018). Multi-scale structural changes of starch and proteins during pea flour extrusion. Food research international, 108, 203-215.
c. Jebalia, I., Maigret, J. E., Réguerre, A. L., Novales, B., Guessasma, S., Lourdin, D., ... & Kristiawan, M. (2019). Morphology and mechanical behaviour of pea-based starch-protein composites obtained by extrusion. Car- bohydrate polymers, 223, 115086.

De manière préférée selon l'invention, lesdites protéines végétales sont constituées de protéines provenant de soja, de pois, d'haricot mungo, de fève, de pomme de terre, de blé ou de microalgues, ou une combinaison de ceux-ci..

Par « microalgues », on entend désigner selon la présente invention, les microalgues eucaryotes qui sont caractérisée par un noyau, comprenant par exemple les chlorophytes, les rhodophytes, les haptophytes, les bacillariophytes, les eustigmatophytes, les euglenophytes, les thraustochytriaceae ou encore les dinophytes, lesdits microalgues eucaryotes étant communément dénommées « microalgues », et les microalgues procaryotes, qui ne possèdent pas de noyau, comprenant les cyanophytes, ci-après dénommées spécifiquement « cyanobactéries »

De manière préférée selon l'invention, les microalgues eucaryotes sont choisies parmi les chlorophytes, de préférence parmi Chlorella, Auxenochlorella, Dunaliella, Tetraselmis, Haematococcus, Scenedesmus; les eustigmatophytes, de préférence Nannochloropsis; les euglénophytes, de préférenc, Euglena; les rhodophytes, de préférence Porphyridium; les bacillariophyceae, de préférence Phaeodactylum et Odontella, et les thraustochytriaceae, de préférence Schizochytrium.

De manière encore plus préférée selon l'invention, les microalgues utilisées sont choisies parmi Chlorella vulgaris, Chlorella prothotecoides, Dunaliella salina ou Euglena gracilis, ou une combinaison de celles-ci.

De manière préférée selon l'invention, l'huile alimentaire est choisie parmi l'huile de colza, l'huile de tournesol, l'huile de palme, l'huile de coco, l'huile d'arachide, l'huile d'olive ou l'huile de lin, ou une combinaison de celles-ci.

De manière préférée selon l'invention, à l'étape c. est ajouté de 0,3% à 10% en masse du produit obtenu à l'étape b. d'acide.

De manière préférée, l'acide est choisi parmi le glucono-delta-lactone, l'acide citrique ou l'acide acétique, ou une combinaison de ceux-ci.

De manière préférée selon l'invention, à l'étape c. est ajouté de 0,2% à 1,5% en masse du produit obtenu à l'étape b. de sel.

De manière préféré, le sel est choisi parmi : chlorure de sodium, chlorure de magnésium, chlorure de calcium, chlorure de potassium, sulfate de magnésium, sulfate de calcium.

Selon un mode préféré de l'invention, le procédé selon l'invention comprend l'étape d'ajout de transglutaminase et/ou l'ajout de sel à l'étape c. et/ou l'ajout d'acide à l'étape c.

De manière plus préférée, le procédé selon l'invention comprend au moins deux des éléments choisis parmi : l'étape d'ajout de transglutaminase et/ou l'ajout de sel à l'étape c. et/ou l'ajout d'acide à l'étape c.

Selon un mode de réalisation, ledit procédé d'obtention de substitut végétal à la chair animale cuite comprenant les étapes de :
a. Mélanger de l'eau, de l'huile alimentaire et des protéines végétales dans un ratio de 8% à 20% de protéines végétales, 2% à 10% d'huile alimentaire et 70% à 90 % d'eau pendant 1 à 5 min à une vitesse comprise entre 200 rpm et 800 rpm et à une température comprise entre 10°C et 30°C.
b. Homogénéiser le produit obtenu à l'étape a. à une pression comprise entre 100 et 600 bar, de préférence entre 150 et 300 bar, à une température d'entre 50°C et 90°C, à une vitesse du liquide sous pression comprise entre 100 et 400 m.s-1.
c. Mélanger au produit obtenu à l'étape b. 0,1% à 5% en masse du produit obtenu à l'étape b. de transglutaminase pendant 60 à 240 min à une vitesse de 50 à 200 rpm et à une température de 30 à 60°C, de préférence entre 30 et 40°C ;
d. Chauffer le produit obtenu à l'étape c. pendant 10 à 30 min à une température entre 80°C et 95°C sous une agitation de 50 à 200 rpm, en y ajoutant 0,2% à 1,5% en masse du produit obtenu à l'étape c. de sel et 0,3% à 10% en masse du produit obtenu à l'étape c. d'acide.
e. Insérer le produit obtenu à l'étape d. dans un extrudeur à une vitesse maximum de 25 kilogrammes par minute, le moteur lié aux vis de l'extrudeur étant réglé à une vitesse comprise entre 200 et 500 rpm, et la température de l'extrudeur étant réglée à entre 50°C et 200°C ;
f. Obtention d'un substitut à la chair animale cuite.

Exemple de composition obtenues selon le procédé de l'invention :

**[Tableau 1]**

| Composition 1 (%) | |
|---|---|
| Protéine de chlorelle | 18% |
| Huile de colza | 5% |
| Eau | 77% |

### Exemple de composition selon l'invention

**[Tableau 2]**

| Composition 2 (%) | |
|---|---|
| Protéine de soja | 20% |
| Huile de tournesol | 8% |
| Eau | 72% |

Selon un deuxième aspect, l'invention concerne également l'utilisation du substitut végétal à la chair animale cuite tel qu'obtenu par le procédé précité ou du substitut végétal à la chair animale cuite dans des préparations alimentaires.

De manière préférée, lesdites préparations alimentaires comprennent des nuggets de poulet, des croquettes de poisson, des beignets de crevette, des saucisses ou encore des steaks végétaux.

### Exemples

### Exemple 1 : Préparation de substituts végétal à la chair animale cuite et formation de nuggets de poulet

Mélanger de l'eau, de l'huile alimentaire et des protéines végétales dans un ratio de 15% de protéines végétales, 5% d'huile alimentaire et 80% d'eau pendant 4 min à une vitesse 600 rpm et à une température comprise entre 20°C.

Placer le produit obtenu dans un homogénéisateur haute pression, à une pression de 200 bar, à une température comprise entre 50°C et 90°C, à une vitesse du liquide sous pression comprise entre 100 et 400 m.s-1.

Chauffer le mélange obtenu pendant 20 min à une température de 88°C sous une agitation de 100 rpm.

Le produit obtenu est inséré dans un extrudeur bi-vis à une vitesse maximum de 12 kilogrammes par minute. Le moteur lié aux vis de l'extrudeur est réglé sur une vitesse de 300rpm. La température de l'extrudeur est réglée à 124°C. La buse de sortie de l'extrudeur par lequel est éjecté le produit est rectangulaire et mesure 30 millimètres de largeur et 20 millimètres de hauteur.

Le produit obtenu en sortie d'extrudeur est découpé en morceaux de forme irrégulière dont la plus grande longueur est de 4cm (centimètres, formant les nuggets.

### Exemple 2 : Test d'analyse sensorielle comparatif

A partir du substitut végétal à la chair animale cuite préparé dans l'exemple 1, est réalisé un test d'analyse sensorielle permettant de comparer le degré de fibrosité dudit substitut à celui d'un substitut de nuggets de poulet du marché.

Le degré de fibrosité est défini selon deux critères sensoriels : l'aspect fibreux évalué visuellement et le ressenti de texture fibreuse en bouche.

Une portion de 40g (équivalent à deux nuggets) dudit substitut végétal de nuggets de poulet tel que préparé dans l'exemple 1, est préparée (dit échantillon "A").

Une portion de 40g (équivalent à deux nuggets) d'un substitut de nuggets de poulet du marché est préparée (dit échantillon "B").

Chaque membre d'un panel de 60 consommateurs reçoit un échantillon A et un échantillon B.

Les échantillons sont présentés dans un ordre aléatoire à chaque consommateur. Les ordres possibles sont : AB, BA.

Il est demandé à chaque personne de goûter le premier échantillon et de noter l'aspect fibreux évalué visuellement et le ressenti de texture fibreuse en bouche sur une échelle de 1 à 10 pour cet échantillon.

Il est ensuite demandé à chaque personne de se rincer la bouche avec de l'eau puis de noter l'aspect fibreux évalué visuellement et le ressenti de texture fibreuse en bouche sur une échelle de 1 à 10 pour le second échantillon.

Pour le traitement statistique des résultats, la moyenne et l'écart-type de la note d'aspect fibreux évalué visuellement et de la note de ressenti de texture fibreuse en bouche sont calculés pour les échantillons A et B.

Une analyse de variance avec comparaison multiple des moyennes par le test de Dunnett est réalisée pour déterminer si les notes d'aspect fibreux évalué visuellement et de ressenti de texture fibreuse des échantillons A et B sont significativement différentes en respectant un risque d'erreur de 5%.

Les notes moyennes d'aspect fibreux évalué visuellement et de ressenti de texture fibreuse de l'échantillon A sont significativement supérieures aux notes moyennes de l'échantillon B.

Il est conclu que ledit substitut constituant une alternative végétale à la chair animale cuite préparé dans l'exemple 1, présente un degré de fibrosité supérieur à celui de substitut de nuggets de poulet du marché.

### Exemple 3 : Préparation de substituts végétal à la chair animale cuite comprenant une étape d'ajout de transglutaminase, et formation de nuggets de poulet.

Mélanger de l'eau, de l'huile alimentaire et des protéines végétales dans un ratio de 15% de protéines végétales, 5% d'huile alimentaire et 80% d'eau pendant 4 min à une vitesse 600 rpm et à une température comprise entre 20°C.

Placer le produit obtenu dans un homogénéisateur haute pression, à une pression de 200 bar, à une température comprise entre 50°C et 90°C, à une vitesse du liquide sous pression comprise entre 100 et 400 m.s-1.

Mélanger au produit obtenu 2% en masse du produit de transglutaminase pendant 60 min à une vitesse de 50 à 200 rpm et à une température de 40 à 50°C.

Chauffer le mélange obtenu pendant 20 min à une température de 88°C sous une agitation de 100 rpm.

Le produit obtenu est inséré dans un extrudeur bi-vis à une vitesse maximum de 12 kilogrammes par minute. Le moteur lié aux vis de l'extrudeur est réglé sur une vitesse de 300rpm. La température de l'extrudeur est réglée à 124°C. La buse de sortie de l'extrudeur par lequel est éjecté le produit est rectangulaire et mesure 30 millimètres de largeur et 20 millimètres de hauteur.

Le produit obtenu en sortie d'extrudeur est découpé en morceaux de forme irrégulière dont la plus grande longueur est de 4cm (centimètres), formant les nuggets.

## Revendications

1. Procédé d'obtention d'un substitut à la chair animale cuite comprenant les étapes de :
a. Mélanger de l'eau, de l'huile alimentaire et des protéines végétales constituées d'un extrait composé de 50% à 98% de protéines provenant de soja, de pois, d'haricot mungo, de fève, de pomme de terre, de blé ou de microalgues ou une combinaison de ceux-ci, dans un ratio de 8% à 20% de protéines végétales, 2% à 10% d'huile alimentaire et 70% à 90 % d'eau ;
b. Homogénéiser le produit obtenu à l'étape a. à une pression comprise entre 100 et 600 bars, à une température comprise entre 50°C et 90°C, à une vitesse du liquide sous pression comprise entre 100 et 400 m.s-1 ;
c. Chauffer le produit obtenu à l'étape b. pendant 10 à 30 min à une température de 70 à 95°C, sous une agitation de 50 à 200 rpm ;
d. Insérer le produit obtenu à l'étape c. dans un extrudeur à une vitesse maximum de 25 kilogrammes par minute, le moteur lié aux vis de l'extrudeur étant réglé à une vitesse comprise entre 200 et 500 rpm, et la température de l'extrudeur étant réglée à entre 50°C et 200°C ;
e. Obtention d'un substitut à la chair animale cuite.

2. Procédé d'obtention d'un substitut végétal à la chair animale cuite selon la revendication précédente, **caractérisé en ce que** l'étape a. de mélange est réalisée pendant 1 à 5 min à une vitesse comprise entre 200 rpm et 800 rpm à une température comprise entre 10°C et 30°C.

3. Procédé d'obtention d'un substitut végétal à la chair animale cuite selon l'une quelconque des revendications précédentes, **caractérisé en ce que** la pression appliquée à l'étape b. est comprise entre 150 et 300 bar.

4. Procédé d'obtention d'un substitut végétal à la chair animale cuite selon l'une quelconque des revendications précédentes, **caractérisé en ce que** la température appliquée à l'étape c. est comprise entre 80°C et 95°C.

5. Procédé d'obtention d'un substitut végétal à la chair animale cuite selon l'une quelconque des revendications précédentes, comprenant une étape b'. entre les étapes b. et c., de mélange du produit obtenu à l'étape b. avec de la transglutaminase.

6. Procédé d'obtention d'un substitut végétal à la chair animale cuite selon la revendication précédente, **caractérisé en ce que** la masse de transglutaminase est comprise entre 0,1% à 5% en masse du produit obtenu à l'étape b.

7. Procédé d'obtention d'un substitut végétal à la chair animale cuite selon les revendications 5 ou 6, **caractérisé en ce que** le mélange avec la transglutaminase est réalisé pendant 60 à 240 min à une vitesse de 50 à 200 rpm et à une température de 30 à 60°C, de préférence 30 à 40°C.

8. Procédé d'obtention d'un substitut végétal à la chair animale cuite selon l'une quelconque des revendications précédentes, **caractérisé en ce que** la buse de sortie de l'extrudeur par lequel est éjecté le produit est rectangulaire et mesure entre 5 et 50 mm de largeur et 1 à 30 mm de hauteur.

9. Procédé d'obtention d'un substitut végétal à la chair animale cuite selon l'une quelconque des revendications précédentes, **caractérisé en ce que** les protéines provenant de microalgues proviennent de Chlorella vulgaris, Chlorella prothotecoides, Dunaliella salina ou Euglena gracilis ou une combinaison de celles-ci.

10. Procédé d'obtention d'un substitut végétal à la chair animale cuite selon l'une quelconque des revendications précédentes, **caractérisé en ce que** l'huile alimentaire est choisie parmi l'huile de colza, l'huile de tournesol, l'huile de palme, l'huile de coco, l'huile d'arachide, l'huile d'olive ou l'huile de lin, ou une combinaison de celles-ci.

11. Utilisation du substitut végétal à la chair animale cuite tel qu'obtenu par le procédé selon l'une quelconque des revendications 1 à 10, dans les préparations alimentaires, de préférence dans la préparation de croquettes de poisson, de nuggets de poulet, de beignets de crevette, de saucisses ou bien encore de steaks végétaux.

## Patentansprüche

1. Verfahren zum Gewinnen eines Ersatzes für gekochtes Tierfleisch, umfassend die Schritte:
a. Mischen von Wasser, Speiseöl und pflanzlichen Proteinen, die aus einem Extrakt bestehen, der zu 50 % bis 98 % aus Proteinen besteht, die von Sojabohnen, Erbsen, Mungbohnen, Saubohnen, Kartoffeln, Weizen oder Mikroalgen oder einer Kombination davon stammen, in einem Verhältnis von 8 % zu 20 % pflanzlichen Proteinen, 2 % bis 10 % Speiseöl und 70 % bis 90 % Wasser;
b. Homogenisieren des in Schritt a. gewonnenen Produkts bei einem Druck zwischen 100 und 600 bar, bei einer Temperatur zwischen 50 °C und 90 °C, bei einer Geschwindigkeit der unter Druck stehenden Flüssigkeit zwischen 100 und 400 m.s-1;
c. Erhitzen des in Schritt b. gewonnenen Produkts während 10 bis 30 min bei einer Temperatur von 70 bis 95 °C, unter Rühren mit 50 bis 200 U/min;
d. Einfügen des in Schritt c. gewonnenen Produkts in einen Extruder bei einer maximalen Geschwindigkeit von 25 Kilogramm pro Minute, wobei der Motor, der mit den Extruderschnecken verbunden ist, auf eine Geschwindigkeit zwischen 200 und 500 U/min eingestellt ist und die Temperatur des Extruders auf zwischen 50 °C und 200 °C eingestellt ist;
e. Gewinnen eines Ersatzes für gekochtes Tierfleisch.

2. Verfahren zum Gewinnen eines pflanzlichen Ersatzes für gekochtes Tierfleisch nach dem vorstehenden Anspruch, **dadurch gekennzeichnet, dass** der Schritt a. des Mischens während 1 bis 5 min bei einer Geschwindigkeit zwischen 200 U/min und 800 U/min bei einer Temperatur zwischen 10 °C und 30 °C durchgeführt wird.

3. Verfahren zum Gewinnen eines pflanzlichen Ersatzes für gekochtes Tierfleisch nach einem der vorstehenden Ansprüche,
**dadurch gekennzeichnet, dass** der in Schritt b. angewendete Druck zwischen 150 und 300 bar liegt.

4. Verfahren zum Gewinnen eines pflanzlichen Ersatzes für gekochtes Tierfleisch nach einem der vorstehenden Ansprüche,
**dadurch gekennzeichnet, dass** die in Schritt c. angewendete Temperatur zwischen 80 °C und 95 °C liegt.

5. Verfahren zum Gewinnen eines pflanzlichen Ersatzes für gekochtes Tierfleisch nach einem der vorstehenden Ansprüche, umfassend einen Schritt b', zwischen den Schritten b. und c., des Mischens des in Schritt b. gewonnenen Produkts mit Transglutaminase.

6. Verfahren zum Gewinnen eines pflanzlichen Ersatzes für gekochtes Tierfleisch nach dem vorstehenden Anspruch, **dadurch gekennzeichnet, dass** die Masse der Transglutaminase zwischen 0,1 Masse-% bis 5 Masse-% des in Schritt b. gewonnenen Produkts beträgt.

7. Verfahren zum Gewinnen eines pflanzlichen Ersatzes für gekochtes Tierfleisch nach den Ansprüchen 5 oder 6, **dadurch gekennzeichnet, dass** das Mischen mit der Transglutaminase während 60 bis 240 min bei einer Geschwindigkeit von 50 bis 200 U/min und bei einer Temperatur von 30 bis 60 °C, vorzugsweise 30 bis 40 °C durchgeführt wird.

8. Verfahren zum Gewinnen eines pflanzlichen Ersatzes für gekochtes Tierfleisch nach einem der vorstehenden Ansprüche,
**dadurch gekennzeichnet, dass** die Austrittsdüse des Extruders, durch die das Produkt ausgestoßen wird, rechteckig ist und in der Breite zwischen 5 und 50 mm und in der Höhe 1 bis 30 mm misst.

9. Verfahren zum Gewinnen eines pflanzlichen Ersatzes für gekochtes Tierfleisch nach einem der vorstehenden Ansprüche,
**dadurch gekennzeichnet, dass** die Proteine, die von Mikroalgen stammen, von Chlorella vulgaris, Chlorella prothotecoides, Dunaliella salina oder Euglena gracilis oder einer Kombination davon stammen.

10. Verfahren zum Gewinnen eines pflanzlichen Ersatzes für gekochtes Tierfleisch nach einem der vorstehenden Ansprüche,
**dadurch gekennzeichnet, dass** das Speiseöl aus Rapsöl, Sonnenblumenöl, Palmöl, Kokosöl, Erdnussöl, Olivenöl oder Leinsamenöl oder einer Kombination davon ausgewählt ist.

11. Verwendung des pflanzlichen Ersatzes für gekochtes Tierfleisch, wie gemäß dem Verfahren nach einem der Ansprüche 1 bis 10 gewonnen, in Lebensmittelzubereitungen, vorzugsweise bei der Zubereitung von Fischfrikadellen, Chicken-Nuggets, Garnelen im Backteig, Würstchen oder auch pflanzlichen Steaks.

## Claims

1. A method for obtaining a substitute for cooked animal flesh comprising the steps of:
a. mixing water, food oil and plant-based proteins constituting an extract consisting of 50% to 98% protein from soybeans, peas, mung beans, broad beans, potatoes, wheat or microalgae or a combination thereof, in a ratio of 8% to 20% plant-based proteins, 2% to 10% food oil and 70% to 90% water;
b. homogenizing the product obtained in step a. at a pressure of between 100 and 600 bar, at a temperature of between 50°C and 90°C, at a speed of the liquid under pressure of between 100 and 400 m.s-1;
c. heating the product obtained in step b. for 10 to 30 min at a temperature of 70 to 95°C, while stirring at 50 to 200 rpm;
d. feeding the product obtained in step c. into an extruder at a rate of up to 25 kilograms per minute, the motor linked to the screws of the extruder being set to a speed of between 200 and 500 rpm, and the extruder temperature being set to between 50°C and 200°C;
e. obtaining a substitute for cooked animal flesh.

2. The method for obtaining a plant-based substitute for cooked animal flesh according to the preceding claim, **characterized in that** the mixing step a. is carried out for 1 to 5 min at a speed of between 200 rpm and 800 rpm at a temperature of between 10°C and 30°C.

3. The method for obtaining a plant-based substitute for cooked animal flesh according to any of the preceding claims, **characterized in that** the pressure applied in step b. is between 150 and 300 bar.

4. The method for obtaining a plant-based substitute for cooked animal flesh according to any of the preceding claims, **characterized in that** the temperature applied in step c. is between 80°C and 95°C.

5. The method for obtaining a plant-based substitute for cooked animal flesh according to any of the preceding claims, comprising a step b'., between steps b. and c., of mixing the product obtained in step b. with transglutaminase.

6. The method for obtaining a plant-based substitute for cooked animal flesh according to the preceding claim, **characterized in that** the mass of transglutaminase is between 0.1% and 5% by mass of the product obtained in step b.

7. The method for obtaining a plant-based substitute for cooked animal flesh according to claims 5 or 6, **characterized in that** the mixing with transglutaminase is carried out for 60 to 240 min at a speed of 50 to 200 rpm and at a temperature of 30 to 60°C, preferably 30 to 40°C.

8. The method for obtaining a plant-based substitute for cooked animal flesh according to any of the preceding claims, **characterized in that** the outlet nozzle of the extruder through which the product is ejected is rectangular and measures between 5 and 50 mm wide and between 1 and 30 mm tall.

9. The method for obtaining a plant-based substitute for cooked animal flesh according to any of the preceding claims, **characterized in that** the proteins from microalgae come from Chlorella vulgaris, Chlorella prothotecoides, Dunaliella salina or Euglena gracilis, or a combination thereof.

10. The method for obtaining a plant-based substitute for cooked animal flesh according to any of the preceding claims, **characterized in that** the food oil is chosen from rapeseed oil, sunflower oil, palm oil, coconut oil, peanut oil, olive oil or flax oil, or a combination thereof.

11. A use of the plant-based substitute for cooked animal flesh as obtained by the method according to any of claims 1 to 10 in food preparations, preferably in the preparation of plant-based fish croquettes, chicken nuggets, shrimp fritters, sausages or steaks.
